# EUROPEAN PATENT APPLICATION

(11) **EP 3 421 683 A1**
(43) Date of publication of application: **02.01.2019**
(21) Application number: 17182782.7
(22) Date of filing: 24.07.2017
(51) Int. Cl.: E04F 13/08, A01G 9/02, E04F 13/18

(54) **WALL COVERING SYSTEM**

(30) Priority: 30.06.2017 US 201715638922
(71) Applicant: Architectural Supplements LLC, Waterbury, CT 06708 (US)
(72) Inventor: DECKER, STEVEN C., Waterbury, CT 06708 (US); FEINMAN, PHILIP E., Waterbury, CT 06708 (US)
(74) Representative: Elkiner, Kaya

(57) **Abstract**

A wall covering system includes a body mountable to a wall and a frame configured for mounting over the body and retaining an insert within the body; wherein each of the at least one wall unit is configured to cooperate with another wall unit to provide a montage display.

## Description

### BACKGROUND OF THE INVENTION

### 1. Field of the Invention

The invention disclosed herein relates to wall coverings, and in particular to a system for flexible arrangement of ornamental wall coverings.

### 2. Description of the Related Art

Many individuals are increasingly disconnected from natural elements with increasing urbanization. As architects and designers continually search for new and appealing elements to distinguish their work, ways to incorporate natural elements are in demand.

Unfortunately, many technologies to support use of natural elements have little flexibility and therefore require careful planning. Once in place, the actual design may not be as appealing as initially thought. Further, such designs are typically very difficult to update, requiring labor and expense to change.

Thus, what are needed are methods and apparatus to provide designers with flexible wall covering systems that are useful for providing natural elements within a workplace, home, or other similar environment.

### SUMMARY OF THE INVENTION

In one embodiment, a wall covering system is provided. The covering system includes a body mountable to a wall and a frame configured for mounting over the body and retaining an insert within the body; wherein each of the at least one wall unit is configured to cooperate with another wall unit to provide a montage display.

The body may include a sidewall about a periphery thereof, and the sidewall may include at least one interlock for retention of the frame, the interlock may include a leaf spring and a key. The body may include at least one dimple in a back wall. The insert may include at least one of moss, grass, bark, wood, stone, cork and ornamental paper. The body may include a flange disposed about a periphery thereof. The body may be configured to mounted to at least one of a wall and a free standing display. At least one of the body and the frame may be fabricated from one of polyvinyl chloride (PVC), acrylonitrile butadiene styrene (ABS), plastic, carbon fiber, fiberglass, metal, wood and a composite material.

In another embodiment, a method for covering a wall is provided. The method includes selecting at least one wall unit including a body mountable to a wall and a frame configured for mounting over the body and retaining an insert within the body, wherein each of the at least one wall unit is configured to cooperate with another wall unit to provide a montage display; mounting the wall unit onto the wall; placing an insert into the body; and securing the frame over the body and the insert.

In yet another embodiment, a montage is provided. The montage includes a plurality of wall units including a body mountable to a wall and a frame configured for mounting over the body and retaining an insert within the body, wherein each of the wall units are configured to cooperate with another wall unit within the montage to provide a wall covering; wherein each of the wall units are separated from one another by a flange disposed on a back wall of the body; and each of the wall units contains an insert that includes one of moss, grass, bark, wood, stone, cork and ornamental paper.

### BRIEF DESCRIPTION OF THE DRAWINGS

The features and advantages of the invention are apparent from the following description taken in conjunction with the accompanying drawings in which:
FIG. 1 is a graphic depiction of a wall unit of wallcovering;
FIG. 2 is a graphic depiction of body for the wall unit of FIG. 1;
FIG. 3 is a graphic depiction of a portion of the body of FIG. 2 with media loaded therein;
FIG. 4 is a graphic depiction of a portion of a frame for the body of FIGS. 2 and 3;
FIGS. 5A, 5B and 5C, collectively referred to herein as FIG. 5, are graphic depictions of a safety key and steps for use thereof;
FIG. 6 depicts another embodiment of a safety key;
FIG. 7A and 7B, collectively referred to herein as FIG. 7, are graphic depictions of a planter suited for being disposed alongside the wall unit of FIG. 1; and,
FIG. 8 is a graphic depiction of an arrangement of a plurality of wall units; and,
FIG. 9 is a graphic depiction of a montage where the inserts have been selectively changed.

### DETAILED DESCRIPTION OF THE INVENTION

Disclosed herein is a wallcovering system. Generally, the wallcovering system provides designers with a flexible toolbox for use of a variety of design elements. The wallcovering system includes a plurality of wall units that may be organized in a limitless number of arrangements. The wall units are configured to contain and display a great variety of materials. In the embodiments disclosed herein, the materials principally include natural materials, but other design elements may be used. Examples of natural materials that may be displayed by the wallcovering system include a preserved plant, mosses, grasses, wood, bark, stone, cork, ornamental paper and the like.

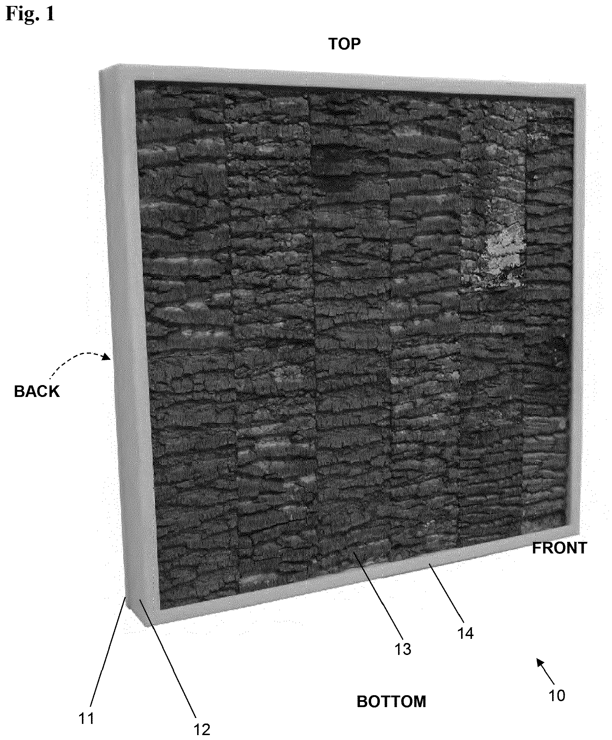

In FIG. 1, an exemplary embodiment of a wall unit 10 is shown. In this example, the wall unit 10 is square having four sides. As a matter of convention, the wall unit 10 is referred to as having a top, a bottom, a front, and a back when mounted to a wall.

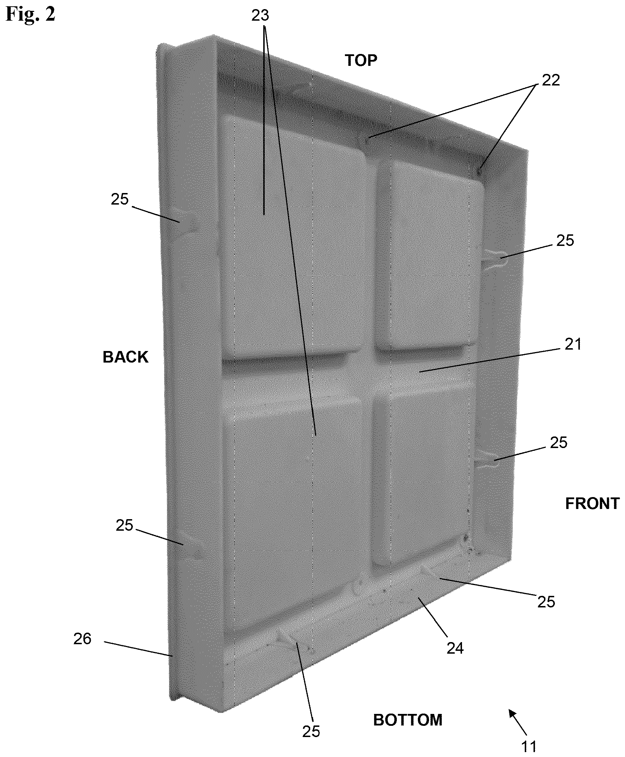

Generally, the wall unit 10 includes a body 11 and a frame 12. Insert 13 is mounted within the body 11 and secured by the frame 12. In the example shown, the frame 12 includes a lip 14 about an inner perimeter thereof. The lip 14 serves to secure the insert 13 within the body 11, and additionally may provide some structural integrity for the frame 12. In the example shown in FIG. 1, the insert 13 includes strips of natural bark from a poplar tree. More detail regarding the body 11 is provided in FIG. 2.

Referring now to FIG. 2, a perspective view of the body 11 is shown. Generally, the body 11 includes a back panel 21 that may be secured to a wall by fasteners 22. Examples of fasteners include screws, nails, drywall fasteners, staples and the like. Adhesives and other types of fasteners such as hook and loop fasteners be used as well or in place of embedding fasteners such as the screws and nails. In the example shown, the back panel 21 includes a plurality of dimples 23. The plurality of dimples 23 provides for decreasing the depth of the body 11 in further increasing the strength of the body 11. In some embodiments, no dimples 23 are included. Disposed about a perimeter of the body 11 is a sidewall 24. In the example shown, the sidewall 24 is continuous. In some other embodiments, the sidewall 24 is segmented, perforated or otherwise modified from a continuous structure. Disposed within the sidewall 24 is at least one interlock 25. In some embodiments, only one interlock is used in the entire sidewall 24. The back panel 21 may extend beyond the sidewall 24 such that a flange 26 is included. Generally, the flange 26 assists installers with spacing of each wall unit 10 when a plurality of wall units 10 are installed together, and may be adjacent or flush to one another.

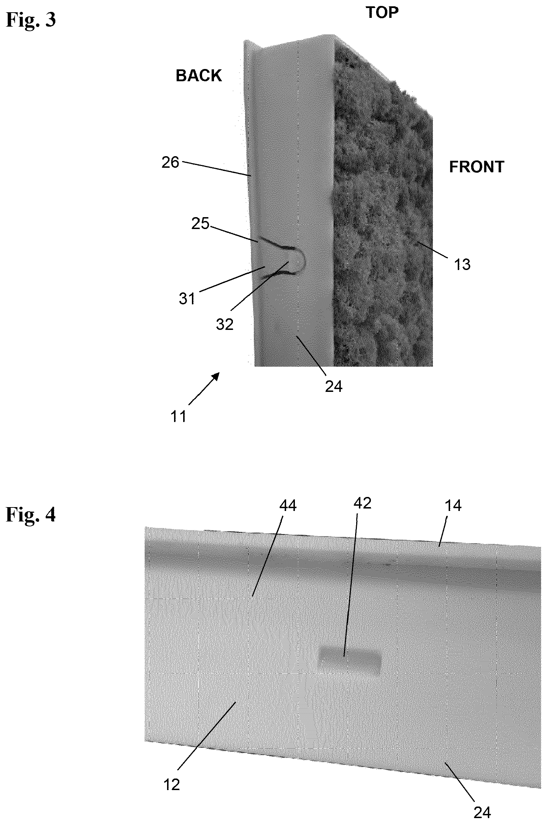

In FIG. 3, and exploded view of the body 11 is shown. In this example, the sidewall 24, interlock 25, and flange 26 are illustrated with greater detail. In particular, it may be seen that interlock 25 includes a leaf spring 31 and a key 32. In this illustration, the key 32 is of an extended cylindrical profile. The key 32 may be of any shape desired cooperating with detent 42 shown in FIG. 4.

In FIG. 4, an interior portion of the sidewall 24 of the frame 12 is shown. As shown in this illustration, the lip 14 extends inwardly from the periphery of the sidewall 24. The sidewall 24 includes a generally flat wall portion 44 upon which a lock feature such as detent 42 is disposed.

When assembling the wall unit 10, the user simply inserts the insert 13 into the body 11. Once the insert 13 has been disposed within the body 11, the frame 12 is disposed upon the body 11. By having at least one interlock 25, the frame 12 is securely disposed over the body 11, thus retaining the insert 13 in place.

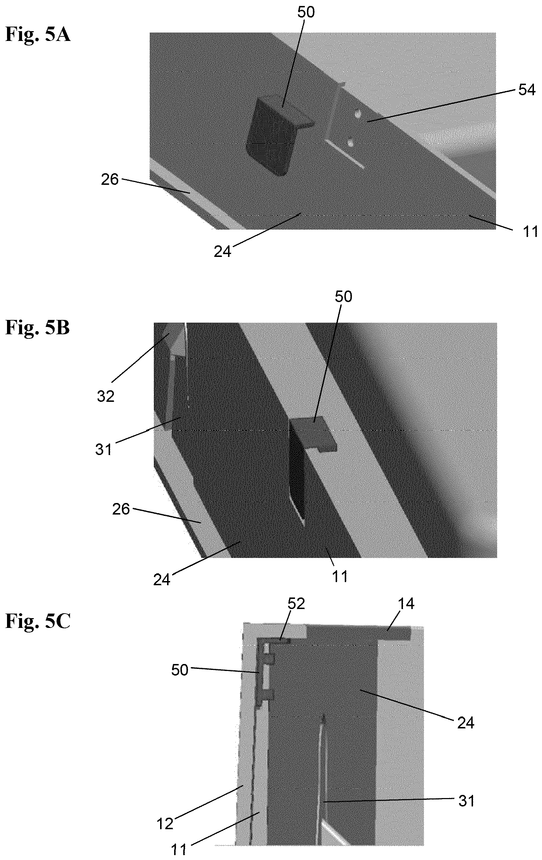

In some embodiments, a safety key may be included. The safety key and steps for installation are introduced with regards to FIG. 5.

Referring now to FIG. 5 (FIGS. 5A, 5B and 5C), aspects of a safety key 50 are shown. Generally, the safety key 50 provides installers with a safety device. For example, if an installation is being made at some height, such as one requiring use of a ladder, it may not be possible to have the frame 12 readily available to secure the insert 13. Instead, the installer may make use of the safety key 50 to ensure the insert 13 remains in place while the frame 12 is retrieved on a separate trip down and up the ladder.

With regard to FIG. 5A, it may be seen that the safety key 50 mounts to the sidewall 24 of the body 11. Generally, the safety key 50 mounts to a safety key recess 54. The safety key recess 54 may be designed for a specific embodiment of the safety key 50. In this example, the safety key recess 54 includes two thruways such that the safety key 50 will securely mount to the sidewall 24 and a bear any load imposed by the insert 13, should be insert 13 begin leaning in a forward direction. Accordingly, the safety key 50 prevents the insert 13 from toppling from the body 11 during the installation process. In this illustration, the safety key 50 is shown in relation to the safety key recess 54.

In FIG. 5B, the safety key 50 is shown in a mounted position. Once mounted, the safety key 50 is generally flush with the sidewall 24. Accordingly, the frame 12 may be disposed over the safety key 50, and the safety key 50 need not be removed to accomplish installation. In some embodiments, it may be preferred to remove the safety key 50 prior to installing the frame 12 over the body 11. In some further embodiments, the safety key 50 is integrated into the body 11. For example, the safety key 50 may be provided as a hinged clip.

Referring now to FIG. 5C, a cutaway view of a portion of the wall unit 10 is shown. In this cutaway view, it may be seen that the safety key 50 is mounted into the sidewall 24 of the body 11. The safety key 50 includes a minor lip 52. The minor lip 52 is adequate for unobtrusively retaining the insert 13, while being small enough such that the lip 14 easily hides the minor lip 52. As may be seen in this illustration, the frame 12 fits over the body 11 with the safety key 50 installed.

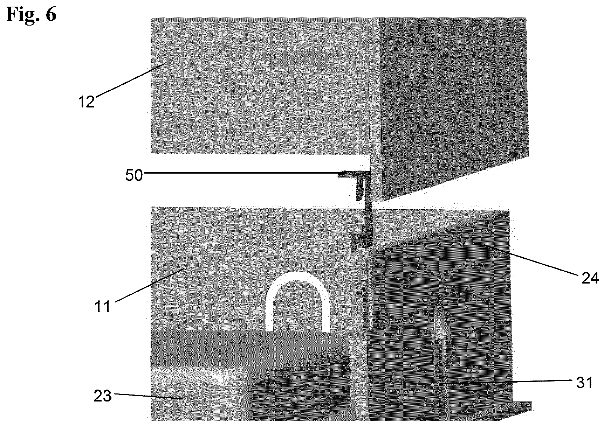

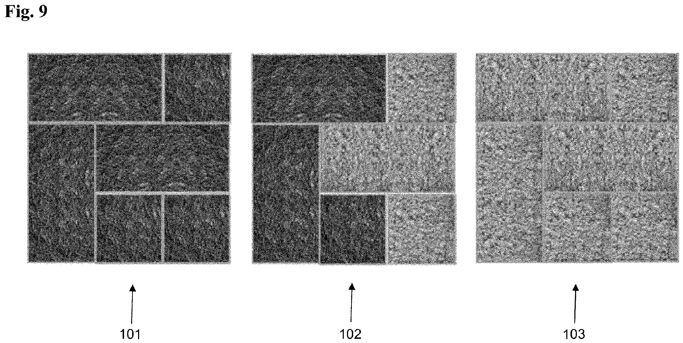

FIG. 6 depicts another embodiment of the safety key 50. As may be noted, a feature that is generally common to a number of embodiments of the safety key 50 is that the safety key 50 is capable of insertion into the sidewall 24 in a constrained space. More specifically, when a plurality of wall units 10 are assembled together (see FIG. 9), use of a clip or retainer that requires some degree of freedom in the lateral direction may not be possible. Accordingly, some embodiments of the safety key 50 provide for shallow coupling, while other embodiments (such as a hinged design or a plunger design) do not permit shallow coupling. Generally, shallow coupling is needed when mounting the safety key 50 between wall units 10 that are positioned against each other.

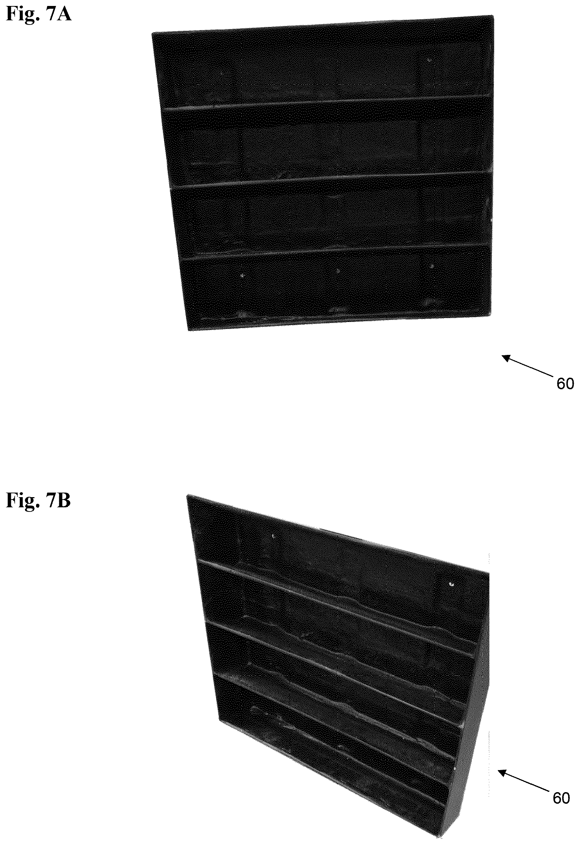

Referring now to FIG. 7 (FIGS. 7A and 7B), a planter 60 for use alongside the wall unit 10 is shown. In this case, the planter 60 may be used to retain other types of ornamentation. For example, the planter 60 may be used to contain live plants, such as ivy and other plantings that may drape down from the wall unit 10. Of course, the term "planter" is not limiting of the device shown. More specifically, it is not required that the planter 60 contain plants. By way of example, the planter 60 may be used to contain artificial embellishments such as Mylar tinsel and the like. Generally, the planter 60 may be disposed alongside the wall unit 10 as a further design element in a montage.

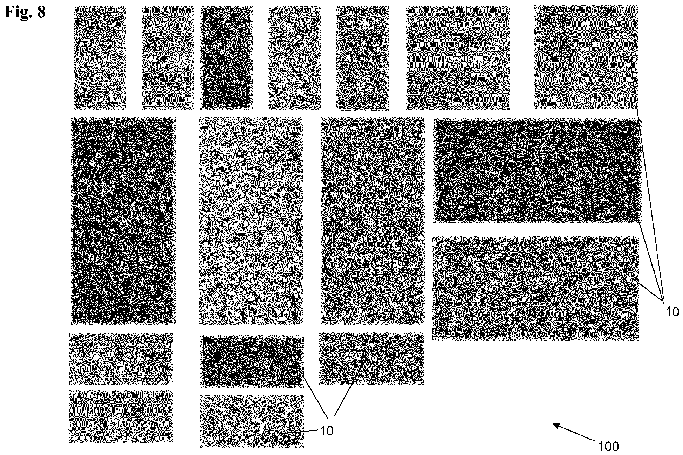

Referring now to FIG. 8, a collection of a variety of wall units 10 is shown. The collection of the units 10 is referred to as a "montage" 100. In embodiments where the montage 100 includes a collection of natural elements or biologic materials, the montage 100 may be referred to as a "bio-montage."

Referring now to FIG. 9, a series of montage 101, 102, 103 are shown. It may be seen that each of the montage 101, 102, 103 have the same underlying pattern which corresponds to the wall units 10 used. However, in each of the montage 101, 102, 103 a differing arrangement of inserts has been employed. Accordingly, one can understand that by use of a variety of inserts 13 with a number of wall units 10, nearly limitless arrangements may be realized.

Having thus introduced aspects of the invention, some additional features, embodiments and considerations are now set forth.

Generally, each wall unit may include a number of accessories as deemed appropriate. For example, hook and loop style fasteners may be used within the body for retention of the insert. In some of these embodiments, the frame and/or lip may not be required.

Generally, components are fabricated from materials as deemed appropriate. For example, at least one of the body and the frame may be manufactured from plastic or polymer materials such as polyvinyl chloride (PVC), acrylonitrile butadiene styrene (ABS), carbon fiber, fiberglass, metal, wood, composite materials and the like.

Components may be fabricated in any depth, height, width, thickness, size or other dimension as deemed appropriate.

The wall units may be fabricated in any shape deemed appropriate. For example, particular designs may be used. More specifically, and by way of non-limiting example, some of the units may be shaped to convey a message, such as display of a corporate logo or a portion thereof.

In some embodiments, at least one hinge may be used to attach the frame to the body. In some embodiments, the frame may be locked to the body to prevent tampering there with.

Ornamental paper may include, for example, preserved leaves, grasses, insects, and other natural elements embedded in the paper.

Generally, the wall covering system results in a changeable wall-mounted holder for aesthetic materials. Each wall unit may be used individually, or as part of the multiple unit display. In some embodiments, the wall units may be assembled on a barrier such as a movable screen to provide a temporary wall or separation of physical areas.

Standards for performance, materials, assembly or other such parameters are to be judged by a designer, manufacturer, user, owner, operator or other similarly interested party. No particular requirements for any standards are implied or to be inferred by the disclosure provided.

All statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Various other components may be included and called upon for providing for aspects of the teachings herein. For example, additional materials, combinations of materials and/or omission of materials may be used to provide for added embodiments that are within the scope of the teachings herein.

When introducing elements of the present invention or the embodiment(s) thereof, the articles "a," "an," and "the" are intended to mean that there are one or more of the elements. Similarly, the adjective "another," when used to introduce an element, is intended to mean one or more elements. The terms "including" and "having" are intended to be inclusive such that there may be additional elements other than the listed elements.

While the invention has been described with reference to exemplary embodiments, it will be understood by those skilled in the art that various changes may be made and equivalents may be substituted for elements thereof without departing from the scope of the invention. In addition, many modifications will be appreciated by those skilled in the art to adapt a particular instrument, situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A wall covering system comprising:
at least one wall unit comprising a body mountable to a wall and a frame configured for mounting over the body and retaining an insert within the body;
wherein each of the at least one wall unit is configured to cooperate with another wall unit to provide a montage display.

2. The wall covering system as in claim 1, wherein the body comprises a sidewall about a periphery thereof, the sidewall optionally comprises at least one interlock for retention of the frame, and wherein the interlock optionally comprises a leaf spring and a key.

3. The wall covering system as in any preceding claim, wherein the body comprises at least one dimple in a back wall.

4. The wall covering system as in any preceding claim, wherein the insert comprises at least one of a preserved plant, moss, grass, bark, wood, stone, cork and ornamental paper.

5. The wall covering system as in any preceding claim, wherein the body comprises a flange disposed about a periphery thereof.

6. The wall covering system as in any preceding claim, wherein the body is configured to mounted to at least one of a wall and a free standing display.

7. The wall covering system as in any preceding claim, wherein at least one of the body and the frame is fabricated from one of polyvinyl chloride (PVC), acrylonitrile butadiene styrene (ABS), plastic, carbon fiber, fiberglass, metal, wood and a composite material.

8. The wall covering system as in any preceding claim, further comprising a safety key configured for mounting to the body and unobtrusively retaining the insert.

9. The wall covering system as in claim 8, wherein the safety key is one of independent from the body and attached to the body.

10. A method for covering a wall, the method comprising:
selecting at least one wall unit comprising a body mountable to a wall and a frame configured for mounting over the body and retaining an insert within the body, wherein each of the at least one wall unit is configured to cooperate with another wall unit to provide a montage display;
mounting the wall unit onto the wall;
placing an insert into the body; and
securing the frame over the body and the insert.

11. The method for covering a wall as in claim 10, further comprising securing a safety key to the body and over the insert.

12. A montage comprising:
a plurality of wall units comprising a body mountable to a wall and a frame configured for mounting over the body and retaining an insert within the body, wherein each of the wall units are configured to cooperate with another wall unit within the montage to provide a wall covering;
wherein each of the wall units are separated from one another by a flange disposed on a back wall of the body; and
each of the wall units contains an insert that comprises a natural element, the natural element optionally comprising at least one of moss, grass, bark, wood, stone, cork, ornamental paper and a live plant.

13. The montage as in claim 12, configured to display a message, the message optionally comprising a logo.

14. The montage as in claim 12 or claim 13, further comprising at least one planter.

15. The montage as in any one of claims 12 to 14, wherein wall unit comprises at least one safety key.
